# EUROPEAN PATENT SPECIFICATION

(11) **EP 4 234 653 B1**
(45) Date of publication and mention of the grant of the patent: **21.01.2026**
(21) Application number: 23180412.1
(22) Date of filing: 25.04.2018
(51) Int. Cl.: C03C 27/06, C09J 5/06, C09J 175/04, C09J 175/06

(54) **METHOD FOR MANUFACTURING INSULATING GLASS AND INSULATING GLASS**
VERFAHREN ZUR HERSTELLUNG VON ISOLIERGLAS UND ISOLIERGLAS
PROCÉDÉ DE FABRICATION DE VERRE ISOLANTS ET VERRE ISOLANTS

(30) Priority: 28.04.2017 JP 2017090610
(43) Date of publication of application: 30.08.2023
(62) Divisional of application: 18789832.5
(73) Proprietor: AGC Inc., Tokyo 100-8405 (JP)
(72) Inventor: FUJII, Yuri, Tokyo, 100-8405 (JP); SHIBUYA, Takashi, Tokyo, 100-8405 (JP); KIKUCHI, Satoshi, Tokyo, 100-8405 (JP); NAGAE, Masashi, Tokyo, 100-8405 (JP)
(74) Representative: Müller-Boré & Partner Patentanwälte PartG mbB

(56) References cited:
- EP-A1- 0 953 622
- US-B1- 6 235 356
- US-B1- 6 235 359

## Description

### TECHNICAL FIELD

The embodiments discussed herein relate to a method of manufacturing an insulating glass and an insulating glass.

### BACKGROUND ART

Conventionally, an insulating glass is known, which includes a plurality of glass sheets arranged to face each other with a spacer interposed therebetween to form an air space layer between the glass sheets, wherein the spacer and the glass sheets are bonded by an adhesive agent, and the thickness of each of the adhesive layers is 0.5 mm or less (see, for example, PTL 1).

According to a configuration of PTL 1, by reducing the thickness of the adhesive layer, moisture permeation inside the adhesive agent can be suppressed, moisture can be quickly removed from the spacer and the adhesive agent, and the drying time after the spacer and the glass sheet are bonded can be reduced.

### [Citation List]

### [Patent Literature]

[PTL 1] Japanese Laid-Open Patent Publication No. H10-238235. US 6 235 356 B1 describes a resin composition for building materials and insulating glass. EP 0 953 622 A1 describes an adhesive for glass.

### SUMMARY OF THE INVENTION

### [Technical Problem]

However, in many cases, simply reducing the thickness of the adhesive layer at the level described in PTL 1 is often insufficient to achieve a mechanization and automation of manufacturing process for the insulating glass. That is, if the drying time is not sufficiently shortened, a waiting time for drying occurs between the processes, which makes the automation difficult. Therefore, in order to automate the manufacture of the insulating glass, it is required to further shorten the drying time.

Accordingly, it is an object of the present invention to provide a method of manufacturing an insulating glass and an insulating glass that can significantly reduce the drying time after a spacer is adhered to glass sheets.

### [Solution to Problem]

In order to achieve the above-object, a method of manufacturing an insulating glass according to an aspect of the present invention and an insulating glass according to a further aspect of the present invention are as follows.
[Item 1] A method of manufacturing an insulating glass including glass sheets arranged to face each other with a spacer interposed between the glass sheets to form an air space layer between the glass sheets, the method including:
   a step of applying an adhesive agent to at least one glass sheet of the glass sheets; and
   a step of adhering the spacer at a temperature of 50 degrees Celsius or more and 160 degrees Celsius or less to the at least one glass sheet,
   wherein the spacer is formed of a thermoplastic resin material including butyl type rubber,
   wherein the adhesive agent is a urethane-based adhesive agent, and
   wherein the urethane-based adhesive agent includes a polyacrylic polyol and at least one of a non-yellowing isocyanate and a derivative of the non-yellowing isocyanate.
[Item 2] The method of manufacturing the insulating glass according to item [1],
   wherein the step of applying the adhesive agent to the at least one glass sheet further comprises:
   a step of applying the adhesive agent to a first glass sheet; and
   a step of applying the adhesive agent to a second glass sheet, and,
   wherein the step of adhering the spacer to the at least one glass sheet further comprises:
      a step of adhering the spacer to the first glass sheet; and
      a step of adhering a second glass sheet to the spacer adhered to the first glass sheet.
[Item 3]
   The method of manufacturing the insulating glass according to item 2, wherein the step of applying the adhesive agent to the second glass sheet is performed before the step of adhering the spacer to the first glass sheet.
[Item 4]
   The method of manufacturing the insulating glass according to item 2, wherein the step of applying the adhesive agent to the second glass sheet is performed after the step of adhering the spacer to the first glass sheet.
[Item 5]
   The method of manufacturing the insulating glass according to any one of items 2 to 4, wherein the step of adhering the second glass sheet is performed while the second glass sheet is pressurized.
[Item 6]
   The method of manufacturing the insulating glass according to item 1, wherein the step of adhering the spacer to the at least one glass sheet further comprises providing the spacer to a space between two glass sheets facing each other while the two glass sheets are arranged to face each other.
[Item 7]
   The method of manufacturing the insulating glass according to item 6, further comprising, after the step of providing the spacer, a step of pressurizing the two glass sheets.
[Item 8]
   The method of manufacturing the insulating glass according to item 7, wherein the step of pressurizing the two glass sheets is performed while the spacer is being heated.
[Item 9]
   The method of manufacturing the insulating glass according to item 1, wherein the step of applying the adhesive agent to the at least one glass sheet further comprises applying the adhesive agent to only a first glass sheet,
   the step of adhering the spacer to the at least one glass sheet further comprises adhering the spacer to the first glass sheet, and,
   wherein the method further comprises:
      applying the adhesive agent to a surface of the spacer opposite to the first glass sheet; and
      adhering a second glass sheet to the surface of the spacer which is opposite to the first glass sheet and to which the adhesive agent is applied.
[Item 10]
   The method of manufacturing the insulating glass according to any one of items 1 to 9, wherein the butyl type rubber includes a high molecular weight butyl type rubber and a low molecular weight butyl type rubber,
   the high molecular weight butyl type rubber has a number average molecular weight of 55000 or more and 150000 or less, and
   the low molecular weight butyl type rubber has a number average molecular weight of 35000 or more and 50000 or less.
[Item 11]
   The method of manufacturing the insulating glass according to any one of items 1 to 10, wherein the step of adhering the spacer to the at least one glass sheet is performed 30 seconds to 20 minutes after the step of applying the adhesive agent to the at least one glass sheet.
[Item 12]
   The method of manufacturing the insulating glass according to any one of items 1 to 11, wherein a thickness of the adhesive agent is 0.1 µm or more and 50 µm or less.
[Item 13]
   The method of manufacturing the insulating glass according to any one of items 1 to 12, wherein the polyacrylic polyol included in the urethane-based adhesive agent has a glass transition temperature higher than 20 degrees Celsius.
[Item 14]
   Insulating glass comprising a plurality of glass sheets arranged to face each other with a spacer interposed between the glass sheets to form an air space layer between the glass sheets, wherein the spacer and the glass sheets are adhered by an adhesive agent,
   a thickness of the adhesive agent is 0.1 µm or more and 50 µm or less, and
   the spacer is formed of a thermoplastic resin material including butyl type rubber,
   wherein the adhesive agent is a urethane-based adhesive agent, and
   wherein the urethane-based adhesive agent includes a polyacrylic polyol and at least one of a non-yellowing isocyanate and a derivative of the non-yellowing isocyanate.
[Item 15]
   The insulating glass according to item 14, wherein a sealing material is provided between the spacer and the glass sheets.

### [Effect of Invention]

According to the present invention, a production time can be shortened and productivity can be improved.

### BRIEF DESCRIPTION OF THE DRAWINGS

FIG. 1 is a schematic cross-sectional view of an essential part illustrating an example of a basic configuration of an insulating glass according to embodiments of the present invention;
FIG. 2 is a schematic cross-sectional view of an essential part illustrating another example of an insulating glass according to embodiments of the present invention;
FIG. 3 is a drawing illustrating a series of steps of a method of manufacturing an insulating glass 10 according to a first embodiment of the present invention;
FIG. 4 is a drawing illustrating a series of steps of a method of manufacturing an insulating glass according to a second embodiment of the present invention;
FIG. 5 is a drawing illustrating a series of steps of a method of manufacturing an insulating glass according to a third embodiment of the present invention;
FIG. 6 is a figure illustrating a configuration of an adhesive property evaluation sample for evaluating adhesiveness of examples 1 to 12 and comparative examples 1 to 3;
FIG. 7 is a table illustrating combination configurations and evaluation results of the examples 1 to 12; and
FIG. 8 is a table illustrating combination configurations and evaluation results of comparative examples 1 to 3.

### MODES FOR CARRYING OUT THE INVENTION

Hereinafter, embodiments for carrying out the present invention will be described with reference to the drawings.

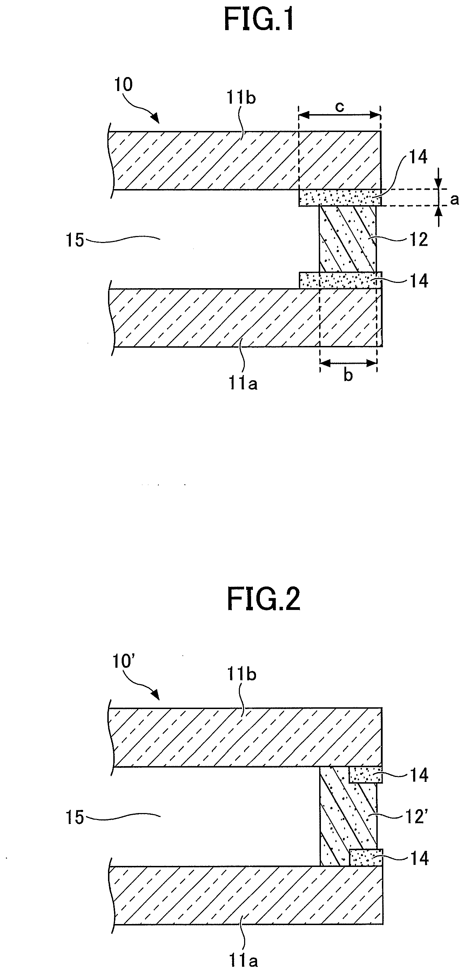

FIG. 1 is a schematic cross-sectional view of an essential part illustrating an example of a basic configuration of an insulating glass according to the present invention. Insulating glass 10 is constituted such that, glass sheets 11a, 11b are arranged to face each other with a predetermined space interposed therebetween by a resin spacer 12, and an air space layer 15 is formed between the glass sheets 11a, 11b.

In the insulating glass 10, respective adhesive layers 14 are formed between the spacer 12 and the glass sheet 11a and between the spacer 12 and the glass sheet 11b. The thickness a of the adhesive layer 14 is 0.1 µm or more and 50 µm or less.

The spacer 12 is formed of a resin material and includes a drying agent in the resin material. As the drying agent, zeolite, silica gel, or the like can be used, and zeolite is preferable because of its high drying performance in a low humidity region.

There are no particular restrictions on the form of the zeolite, and zeolite in the form of powder is preferred from the viewpoint of uniform dispersibility in the resin material for the spacer. The pore diameter is not particularly limited as long as water vapor is absorbed, and 4A zeolite powder that can be obtained at a low cost is desirable.

The moisture absorption performance of the resin material for the spacer is significantly affected by environmental conditions such as a temperature and a humidity, so it is not easy to define the moisture absorption performance of the resin material, but at least in the temperature range of -20 degrees Celsius to +60 degrees Celsius, which is the temperature range in which the insulating glass is used, the resin material preferably has a moisture absorption performance of 0.1% or more with respect to the weight of the sealing material.

As the resin material forming the spacer 12, a thermoplastic resin material is used in view of the fact that the drying time (curing time) after the insulating glass 10 is manufactured can be shortened. Also, a resin material including a butyl type rubber material is used so that a sufficiently low moisture permeability can be obtained as the spacer of the insulating glass. Furthermore, it is preferable to add a material that contributes to an increase in the hardness, such as crystalline polyolefin, so that sufficient shape retention property can be obtained as the spacer 12 of the insulating glass 10.

Thus, the thermoplastic resin material used as the material of the spacer 12 of the insulating glass 10 according to the present embodiment includes butyl type rubber. The butyl type rubber included in the thermoplastic resin material includes two types of materials: a material at a high molecular weight side constituting a high molecular weight butyl type rubber and a material at a low molecular weight side constituting a low molecular weight butyl type rubber.

Here, the high molecular weight butyl type rubber and the low molecular weight butyl type rubber have almost the same chemical structure but different molecular weights. Since the chemical structures are the same, the gas permeability and chemical resistance are the same, but the physical properties such as melt viscosity and elastic modulus are different due to the different molecular weight. The high molecular weight butyl rubber is a block-like solid and exhibits properties as an elastomer. On the other hand, the low molecular weight butyl type rubber exhibits properties as a viscous liquid and adhesive.

In the insulating glass 10 according to the present embodiment, the difference in physical properties due to the molecular weight of the butyl type rubber is utilized in order to increase the fluidity at a high temperature (decrease the melt viscosity) while maintaining the elastic modulus at a room temperature. Hereinafter, the contents thereof will be explained.

In order to lower the melt viscosity, the molecular weight of the high molecular weight butyl type rubber has great influence. In selecting the high molecular weight butyl type rubber, it is preferable to use a material at a lower molecular weight side as long as the physical properties of the high molecular weight butyl type rubber (i.e., high elastomer property and elasticity) are exhibited. Specifically, as the high molecular weight butyl type rubber, it is preferable to use a material having a number average molecular weight of 55000 or more and 150000 or less, and it is more preferable to use a material having a number average molecular weight of 60000 or more and 120000 or less, and it is still more preferable to use a material having a number average molecular weight of 65000 or more and 100000 or less, and it is particularly preferable to use a material having a number average molecular weight of 70000 or more and 80000 or less.

When a butyl type rubber at a lower molecular weight side is selected from among high molecular weight butyl type rubbers as the high molecular weight butyl type rubber, a decrease in the elastic modulus may occur at a room temperature, and problems may occur in the shape retention property as the pair glass, such as, e.g., plate misalignment. Therefore, in order to reduce the melt viscosity and maintain the elastic modulus at a room temperature, in the selection of the low molecular weight butyl type rubber, a material at a higher molecular weight side is preferably selected within a range in which the physical properties (i.e., high viscosity) of the low molecular weight butyl type rubber are exhibited. Specifically, as the low molecular weight butyl type rubber, it is preferable to use a material having a number average molecular weight of 35000 or more and 50000 or less, and it is more preferable to use a material having a number average molecular weight of 38000 or more and 45000 or less.

By selecting the materials of butyl type rubbers as described above, it is possible to manufacture and configure the high-quality insulating glass 10 including the spacer 12 capable of increasing the productivity while maintaining the elastic modulus at a room temperature and reducing the melt viscosity at a high temperature.

It is preferable from the viewpoint of automation of the manufacturing process of the insulating glass 10 that the spacer 12 is formed by directly extruding a resin material into a spacer shape on one of the glass sheets and then pressing the other of the glass sheets to arrange the spacer 12 between the plurality of glass sheets. Alternatively, a resin material may be directly extruded into a spacer shape between a plurality of glass sheets 11a, 11b held away from each other to provide the spacer 12 between the plurality of glass sheets 11a, 11b, or the spacer 12 can be formed separately from a resin material and arranged between the plurality of glass sheets. These methods are appropriately determined in view of manufacturing equipment for the insulating glass 10 and the like.

Even when the spacer 12 having a low moisture permeability is used, moisture permeates from the adhesive layer 14 when the adhesive layer 14 is thick. When the thickness of the adhesive layer 14 is more than 50 µm, moisture permeation inside the adhesive layer 14 cannot be suppressed, and even in the initial stage, the dew point of the air space layer 15 is unlikely to drop. Therefore, in the embodiments of the present invention, the thickness of the adhesive layer 14 is configured to be equal to or less than 50 µm. In view of the fact that moisture permeation inside the adhesive layer 14 can be especially effectively suppressed, the thickness of the adhesive layer 14 is preferably 30 µm or less, more preferably 20 µm or less, still more preferably 10 µm or less, still more preferably 3 µm or less, and most preferably 2 µm or less. The lower limit of the thickness of the adhesive layer 14 is such that the adhesiveness between the glass sheets 11a, 11b and the spacer 12 does not become insufficient as the performance of the insulating glass 10 due to dissipation of the adhesive agent, and is configured to be 0.1 µm. The thinner the adhesive layer 14 is, the better. However, a problem arises if the adhesive force is significantly lowered and the function as an adhesive agent cannot be achieved. Therefore, in the present embodiment, the lower limit of the thickness of the adhesive layer 14 is configured to be 0.1 µm or more. When the thickness of the adhesive layer 14 is 0.1 µm or more, the adhesive function for bonding the spacer 12 and the glass sheets 11a, 11b can be achieved without any problem. The thickness of the adhesive layer 14 may be 0.2 µm or more, or 0.3 µm or more.

When the spacer 12 itself has a certain degree of stickiness and adhesiveness to the glass sheets 11a, 11b, the adhesive layer 14 according to the embodiments of the present invention may be provided on a part of the entire periphery of the insulating glass 10 in terms of reinforcement of the stickiness and adhesiveness of the spacer 12. The adhesive layer 14 is preferably provided on the entire periphery of the insulating glass 10 in view of being able to obtain sufficient adhesion durability between the spacer 12 and the glass sheets 11a, 11b. In this case, on all sides of the insulating glass 10 having the adhesive layer 14, the thickness of the adhesive layer 14 is preferably 50 µm or less. When there is an adhesive layer 14 even in a part of which the thickness is more than 50 µm, moisture easily permeates from the part.

The thickness of the adhesive layer 14 may have some non-uniformity in the width direction (for example, the left-to-right direction in FIG. 1), but the adhesive layer 14 preferably has a uniform thickness. When the thickness is not uniform, this is likely to be a cause of peeling between the spacer 12 and the glass sheets 11a, 11b. Even in a case where the thickness is not uniform and a part of the thickness in the width direction exceeds 50 µm, as long as a portion exceeding 50 µm is extremely small and the remaining portion other than that occupies most of the region in the width direction, the thickness of the adhesive layer may be considered to be, if the permeation of moisture can be substantially prevented, 50 µm or less because the thickness in most of the region in the width direction is 50 µm or less.

Since the adhesive agent mixes with the material of the spacer 12 at the interface with the spacer 12, the thickness of the adhesive layer 14 becomes slightly smaller when the adhesive agent is interposed between the glass sheets 11a, 11b and the spacer 12 as compared with the thickness of the adhesive agent alone. In the embodiments of the present invention, the difference in the thickness due to this decrease in the thickness is within the margin of error. Therefore, regarding the non-uniformity in the width direction, non-uniformity to the extent of the above decrease can be considered as a substantially uniform thickness.

FIG. 2 is a schematic cross-sectional view of an essential part illustrating another example of an insulating glass according to the present invention, and illustrates an example in which a shape of a spacer is different from the shape of the spacer 12 illustrated in FIG. 1. In the insulating glass 10', the glass sheets 11a, 11b are arranged to face each other with a predetermined space interposed therebetween by a resin spacer 12', and an air space layer 15 is formed between the glass sheets 11a, 11b.

The spacer 12' is formed such that a side at the air space layer 15 is wider, and a side at the end surface of the insulating glass 10' is narrower than the side at the air space layer 15. And, on both sides (the side at the glass sheet 11a and the side at the glass sheet 11b), the difference in the width is less than twice the thickness of the adhesive layer 14 (the thickness of the adhesive agent is 0.5 mm or less, and accordingly, in total, the difference in the thickness is 1 mm or less). The adhesive layer 14 is provided in a gap of 0.5 mm or less between the spacer 12' and the glass sheets 11a, 11b arising due to this difference.

As described above, the adhesive layer 14 may be in a form of being interposed, between the glass sheets 11a, 11b and the spacer 12', only in a portion in the left-to-right direction illustrated in the drawing, rather than throughout the entire surface of the spacer 12' facing the glass sheets 11a, 11b.

However, from the viewpoint of obtaining higher adhesiveness, the adhesive layer 14 is preferably interposed, between the spacer 12 and the glass sheets 11a, 11b, throughout the entire surface of the spacer 12 facing the glass sheets 11a, 11b.

In particular, configuring a width c of the adhesive layer 14 to be larger than a width b in the left-to-right direction, illustrated in the drawing, of the spacer 12, so that the adhesive layer 14 extends to the air space layer 15 and a part of the adhesive layer 14 is exposed to the air space layer 15 as illustrated in FIG. 1, is preferable because a still higher degree of adhesion can be obtained. This is more preferable because not only the high adhesiveness is obtained but also this eliminates the requirement for the high degree of precision in the size of the spacer 12 and the high degree of precision in the interposition between the glass sheets 11a, 11b, and the productivity of the insulating glass 10 can be improved. In addition, because the high degree of precision is not required for the size and the position accuracy of the spacer 12, the width c of the adhesive layer may not be necessarily larger than the width b of the spacer throughout the entire periphery of the insulating glass 10, and the width c may be larger than the width b in at least a part of the entire periphery.

In the above example, the insulating glass 10, 10' using two glass sheets 11a, 11b has been explained, but the insulating glass 10, 10' according to the embodiments of the present invention may include three or more glass sheets. The glass sheets to be used are not limited to ordinary single-sheet glass sheet, but various types of glass sheets such as an organic transparent resin plate referred to as so-called resin glass, a glass sheet with a functional coating applied to its surface, a tempered glass with a tempering treatment, and the like can be used. Laminated glass in which a plurality of these glass sheets are bonded together through an adhesive intermediate film, a laminated glass in which a resin film is laminated on the surface, or the like can also be used.

Subsequently, a method for manufacturing an insulating glass 10 according to the embodiments of the present invention will be described. In the following embodiments, the method for manufacturing the insulating glass 10 illustrated in FIG. 1 will be explained as an example.

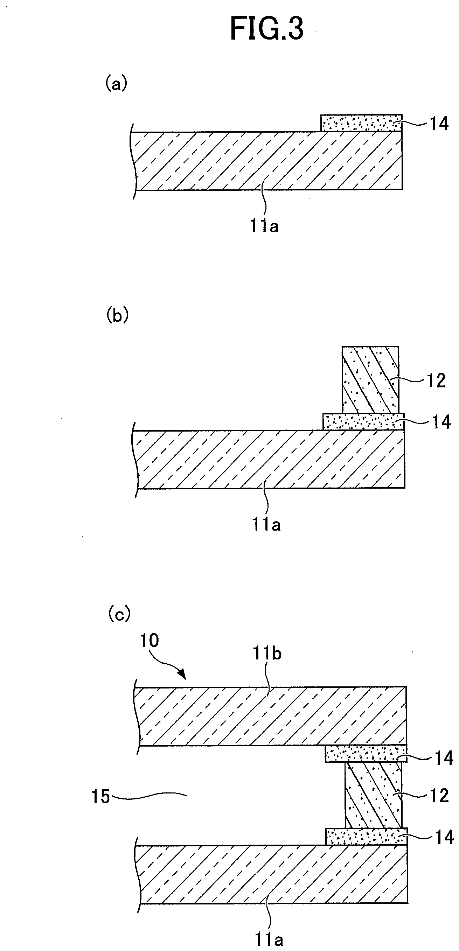

FIG. 3 is a drawing illustrating a series of steps of a method of manufacturing an insulating glass 10 according to a first embodiment of the present invention.

FIG. 3 (a) illustrates an example of an adhesive agent application step. In the adhesive agent application step, the adhesive agent 14 is applied to a predetermined region of the outer edge portion of a glass sheet 1a. In the following explanation, because the adhesive agent 14 forms the adhesive layer 14, the same reference numerals are used without distinguishing the adhesive agent 14 and the adhesive layer 14 from each other.

The method of applying the adhesive agent 14 is not particularly limited, and may be performed by various application methods such as, e.g., an application with a brush, an application with cloth, an application with a material having a solid shape such as a felt, an application with a spray, an application by dripping, and the like. In an application using an impregnated material such as a brush, a cloth, or a felt, it is possible to perform the application so as to draw a predetermined application region of the glass sheet 11a with an impregnated member impregnated with the adhesive agent 14. On the other hand, in the application by spraying or dripping, it is possible to directly apply or spray the adhesive agent 14 from above the glass sheet 11a. When using a spray, it is not always necessary to spray from above the glass sheet 11a, and it is possible to perform the application while the glass sheet 11a is arranged in a vertically standing state or in an obliquely arranged state. Thus, the adhesive agent 14 can be applied on the surface of the glass sheet 11a by various methods and means according to the purpose.

In the present embodiment, because an example of manufacturing the insulating glass 10 illustrated in FIG. 1 will be explained, the application region is larger than the region that forms the spacer 12. However, the application region can also be changed appropriately according to the purpose, and for example, when the insulating glass 10' illustrated in FIG. 2 is manufactured, the adhesive agent 14 may be applied to a region smaller than the region forming the spacer 12'. Although not illustrated, it is naturally possible to apply the adhesive agent 14 to the same region as the spacer 12. As described above, the application region of the adhesive agent 14 can be changed in various manners according to the purpose.

FIG. 3 (b) illustrates an example of a spacer adhesion step. In the spacer adhesion step, the spacer 12 is adhered onto the adhesive agent 14 applied to the glass sheet 11a. The spacer 12 is formed of a thermoplastic resin material including butyl type rubber as described above. Also, the spacer 12 may be pre-molded by a resin material, for example, as described above, and the molded spacer 12 can be pressed onto and adhered to the adhesive agent 14. At this time, the temperature of the spacer 12 is configured to be 50 degrees Celsius or higher and 160 degrees Celsius or lower. In other words, the spacer 12 once formed is adhered to the glass sheet 11a in a melted state.

Conventionally, the spacer 12 is heated to a high temperature such as 180 degrees Celsius. In the present embodiment, the spacer 12 is heated to 160 degrees Celsius or less. Since the spacer 12 is brought to 160 degrees Celsius or less, the cooling time after the adhesion can be shortened and the productivity can be improved. Also, the spacer 12 attains a state having a viscosity allowing the spacer 12 to be easily molded, so that the spacer 12 can be easily molded into a predetermined shape.

The spacer 12 is applied at 50 degrees Celsius or more, so that the spacer 12 attains a state of being easily deformed and easily molded. As described above, the spacer 12 is adhered using the adhesive agent 14 while the spacer 12 is brought to 50 degrees Celsius or more and 160 degrees Celsius or less, so that the spacer 12 can be adhered in such a state that the spacer 12 can be easily molded, and the cooling time after the adhesion can be shortened, and the productivity can be improved.

As described above, the butyl type rubber is used as the material of the spacer 12. The butyl type rubber includes two types of materials: a material at a high molecular weight side constituting a high molecular weight butyl type rubber and a material at a low molecular weight side constituting a low molecular weight butyl type rubber. As the high molecular weight butyl type rubber, it is preferable to use a material having a number average molecular weight of 55000 or more and 150000 or less. As the low molecular weight butyl type rubber, it is preferable to use a material having a number average molecular weight of 35000 or more and 50000 or less. As a result, the viscosity of butyl type rubber can be lowered, and the spacer 12 can be molded at 50 degrees Celsius or more and 160 degrees Celsius or less. Since the viscosity of butyl type rubber is low, even at 50 degrees Celsius or more and 160 degrees Celsius or less, the mixing with the adhesive agent 14 advances rapidly, and the production time can be shortened. Conventionally, unless the spacer 12 is heated to around 180 degrees Celsius, the spacer 12 did not melt, and the spacer 12 could not be formed on the glass sheet 11a. For this reason, it took time to cool the spacer 12, and accordingly, the production time is required, but in the method of manufacturing the insulating glass according to the present embodiment, the spacer 12 can be adhered to the glass sheet 11a at a relatively low temperature of 50 degrees Celsius or more and 160 degrees Celsius or less.

The temperature of the spacer 12 is not limited, as long as it is 50 degrees Celsius or more and 160 degrees Celsius or less, and the temperature of the spacer 12 is preferably 150 degrees Celsius or less, more preferably 130 degrees Celsius or less, still more preferably 120 degrees Celsius or less, and particularly preferably 110 degrees Celsius or less. This is because when the temperature is lower, the degradation of the spacer 12 is reduced, and the cooling time of the spacer 12 can be shortened. Also, the temperature of the spacer 12 is preferably 60 degrees Celsius or higher, and more preferably 70 degrees Celsius or higher. This is because the spacer 12 can be easily deformed and easily molded.

The spacer 12 is preferably adhered to the glass sheet 11a 30 seconds to 20 minutes after the adhesive agent 14 is applied to the glass sheet 11a. That is, the butyl type rubber including the high molecular weight butyl type rubber and the low molecular weight butyl type rubber as described above is used as the spacer 12, so that the adhesive agent 14 and the spacer 12 mix well. Therefore, even when the adhesive agent 14 to be applied is thin, a high adhesion property can be maintained. By thinning the adhesive agent 14 to be applied, the adhesive agent 14 dries within 20 minutes, and the spacer 12 can be quickly adhered to the glass sheet 11a. As a result, the production time can be shortened. Conventionally, because the application thickness of the adhesive agent is thicker than 50 µm, it takes 30 minutes or more to dry after the application, resulting in a longer waiting time and making automation difficult.

On the other hand, according to the method for manufacturing the insulating glass according to the present embodiment, the spacer 12 can be adhered to the glass sheet 11a 30 seconds to 20 minutes after the adhesive agent 14 is applied to the glass sheet 11a. When the waiting time after the adhesive agent 14 is applied to the glass sheet 11a is about 30 seconds to 1 minute, the step can be automated, and the insulating glass 10 can be manufactured automatically.

As described above, the thickness of the adhesive agent 14 is preferably 0.1 µm or more and 50 µm or less. As mentioned above, because the low viscosity butyl type rubber is used as the spacer 12, the adhesive agent 14 and the spacer 12 mix well. Therefore, the thickness of the adhesive agent 14 can be reduced. As a result, the adhesive agent 14 dries in a short time, i.e., 30 seconds to 20 minutes, and the productivity can be improved.

As described above, in the method for manufacturing the insulating glass according to the present embodiment, the time it takes to carry out the adhesive agent application step in FIG. 3 (a) to the spacer adhesion step in FIG. 3 (b) can be significantly reduced, and the productivity can be improved, as compared to the conventional method.

FIG. 3 (c) is another drawing illustrating an example of a glass sheet adhesion step. In the glass sheet adhesion step, the other glass sheet 11b is adhered to the spacer 12. The glass sheet 11b is adhered to the spacer 12 in a state in which the adhesive agent 14 is already applied to a predetermined region of the outer edge portion of the glass sheet 11b. Here, as the adhesive agent 14, the same adhesive agent 14 as the adhesive agent 14 applied to the glass sheet 11a may be used, and the application region for applying the adhesive agent 14 may also be the same as the application region for the glass sheet 11a.

The timing for applying the adhesive agent 14 to the glass sheet 11b may be the same as or may be different from the timing for applying the adhesive agent 14 to the glass sheet 11a. For example, the adhesive agent 14 may be applied to the glass sheet 11a first, and the adhesive agent 14 may be applied to the glass sheet 11b during the spacer adhesion step. On the other hand, the glass sheets 11a, 11b may be arranged side by side, and the adhesive agent 14 may be applied to the glass sheets 11a, 11b almost simultaneously. Conversely, the adhesive agent 14 can be applied to the glass sheet 11b first, and then the adhesive agent 14 can be applied to the glass sheet 11a. As described above, the timing for applying the adhesive agent 14 to the glass sheet 11b can be set appropriately according to the purpose and the application equipment.

Also, in a manner similar to what has been explained with reference to FIG. 3 (a), the application method and application means of the adhesive agent 14 to the glass sheet 11b can be selected from various application methods and application means according to the purpose. The contents thereof is as explained with reference to FIG. 3 (a), and accordingly, the explanation thereabout is omitted here.

In the glass adhesion step, the glass sheet 11b may be pressurized as necessary. For the pressurization, the pressure may be applied from above the glass sheet 11b, or the pressure may be applied from both sides of the glass sheets 11a, 11b. With the pressurization, the adhesion between the glass sheets 11a, 11b and the spacer 12 can be ensured, and the positions of the glass sheets 11a, 11b and the spacer 12 can be fixed.

Once the spacer 12 is brought to 50 degrees Celsius or more and 160 degrees Celsius or less in the spacer adhesion step, thereafter, the glass sheet adhesion step can be performed without heating. When the temperature of the spacer 12 is brought to 50 degrees Celsius or more and 160 degrees Celsius or less in the stage of the spacer adhesion step, the glass sheet 11b can adhere to the spacer 12 even if the temperature of the spacer 12 thereafter decreases, and therefore, there arises no problem in terms of the manufacturing process.

In FIG. 3, an example of manufacturing an insulating glass 10 including two glass sheets 11a, 11b has been described, but in order to manufacture insulating glass 10 including more glass sheets 11a, 11b such as three or four glass sheets, steps for applying the adhesive agent 14 onto the glass sheet 11b, adhering a new spacer 12, and adhering another glass sheet onto the new spacer 12 may be added. That is, the steps in FIG. 3 (a) to 3C may be repeated according to the number of glass sheets in the insulating glass 10.

As described above, according to the method for manufacturing the insulating glass according to the first embodiment, the adhesive agent 14 can be dried in a short time, and the productivity can be improved.

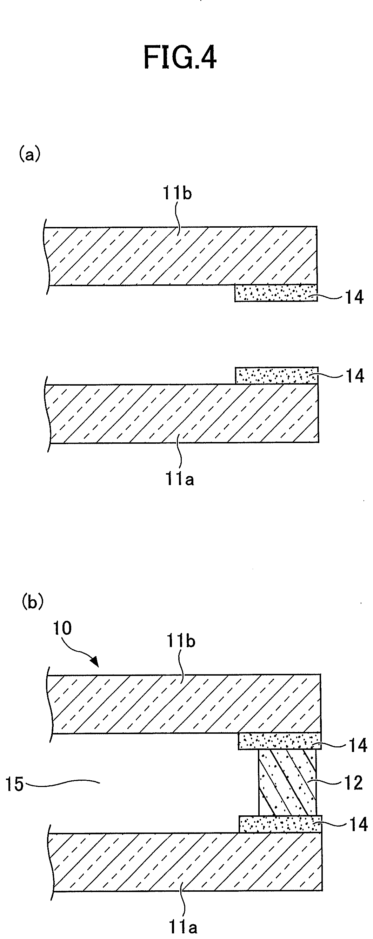

FIG. 4 is a drawing illustrating a series of steps of a method of manufacturing an insulating glass according to a second embodiment of the present invention.

FIG. 4 (a) illustrates an example of a glass sheet arrangement step. In the glass sheet arrangement step, two glass sheets 11a, 11b to which the adhesive agent 14 is applied are arranged to face each other. Naturally, the arrangement is made so that the adhesive agent application regions to which the adhesive agent 14 is applied face each other.

Before the glass sheet arrangement step, the adhesive agent application step described in FIG. 3 (a) is executed for each of the glass sheets 11a, 11b. Then, the glass sheets 11a, 11b to which the adhesive agent 14 has already been applied are arranged to face each other.

FIG. 4 (b) illustrates an example of a spacer adhesion step. In this case, the spacer 12 is molded by extruding a thermoplastic resin material of molten butyl type rubber by extrusion molding to fill the gap between the two glass sheets 11a, 11b facing each other. For example, by using the above-explained butyl type rubber including the high molecular weight butyl type rubber and the low molecular weight butyl type rubber as the material for the spacer, extrusion can be performed at a low temperature of about 100 to 150 degrees Celsius, and the spacer adhesion step can be performed easily.

In the spacer adhesion step, the glass sheet 11b or the glass sheets 11a, 11b may be pressurized as necessary. The method of pressurization is similar to the method explained in FIG. 3 (c), which can be applied as it is, and accordingly, the explanation thereabout is omitted.

The spacer adhesion step of FIG. 4 (b) is not a step for adhering a molded spacer but is a step for filling the spacer 12 between the glass sheets 11a, 11b to which the adhesive agent 14 is applied. Therefore, the spacer adhesion step of FIG. 4 (b) may also be referred to as a spacer filling step or a spacer molding step.

In the method of manufacturing the insulating glass according to the second embodiment, an insulating glass 10 including more glass sheets 11a, 11b such as three or four glass sheets can be manufactured by repeating steps in FIG. 4. This point is similar to the content explained in the first embodiment, and accordingly, the explanation thereabout is omitted.

Also, in the method for manufacturing the insulating glass according to the second embodiment, the adhesive agent 14 can be dried in a short time, and the productivity can be improved.

In either of the first and second embodiments, the application region of the adhesive agent 14 and the adhesion region of the spacer 12 can be combined appropriately according to the purpose.

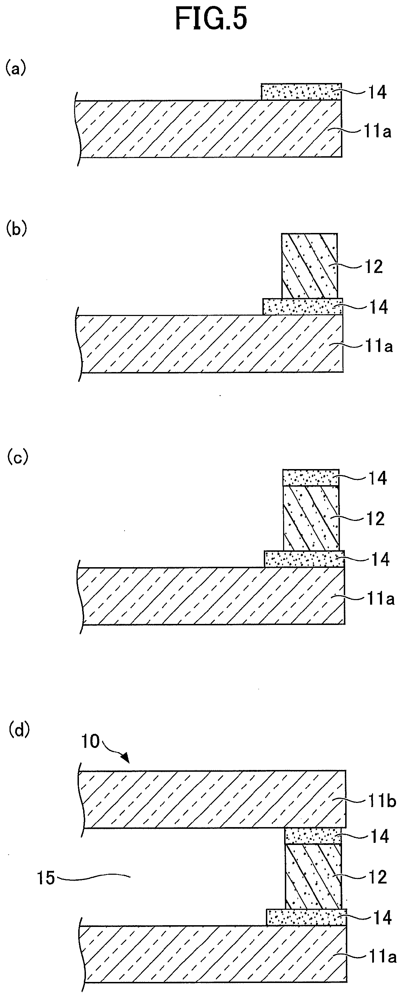

FIG. 5 is a drawing illustrating a series of steps of a method of manufacturing an insulating glass according to a third embodiment of the present invention. In the third embodiment, the same constituent elements as those in the first and second embodiments are denoted with the same reference numerals, and the explanation thereabout is omitted.

FIG. 5 (a) is a drawing illustrating an example of a glass sheet adhesive agent application step. In the glass sheet adhesive agent application step, the adhesive agent 14 is applied to the predetermined region of the outer edge portion of glass sheet 11a. Since the adhesive agent application step is similar to FIG. 3 (a) of the method of manufacturing the insulating glass according to the first embodiment, the contents explained in FIG. 3 (a) can be applied as they are. Therefore, detailed explanation about the adhesive agent application step is omitted.

FIG. 5 (b) is a drawing illustrating an example of a spacer adhesion step. In the spacer adhesion step, the spacer 12 is adhered onto the adhesive agent 14 applied to the glass sheet 11a. Since the spacer adhesion step is similar to FIG. 3 (b) of the method of manufacturing the insulating glass according to the first embodiment, the contents explained in FIG. 3 (b) can be applied as they are. Therefore, detailed explanation about the spacer adhesion step is omitted.

FIG. 5 (c) is a drawing illustrating an example of a spacer adhesive agent application step. In the spacer adhesive agent application step, the adhesive agent 14 is applied to the upper surface of the spacer 12, i.e., a surface of the spacer 12 opposite to the surface of the spacer 12 adhered to the glass sheet 11a via the adhesive agent 14. More specifically, the adhesive agent 14 is applied to the surface of the spacer 12 to which the glass sheet 11a is not adhered and which is in parallel with the glass sheet 11a.

In the method of manufacturing the insulating glass according to the first and second embodiments, the adhesive agent 14 is applied to the glass sheet 11b for sandwiching the spacer 12, but the method of manufacturing the insulating glass according to the third embodiment is different from the method of manufacturing the insulating glass according to the first and second embodiments in that the adhesive agent 14 is applied to the spacer 12, not the glass sheet 11b. As illustrated in FIG. 5 (c), the size of the area of the spacer 12 is naturally smaller than that of the glass sheet 11a, so the adhesive agent 14 is applied according to the size of the area of the spacer 12 to the extent that the adhesive agent 14 does not overflow to a side surface of the spacer 12.

Here, the thickness of the adhesive agent 14 may be 0.1 µm or more and 50 µm or less, and is preferably configured to be, for example, in a range of 20 to 30 µm. Since the surface of the spacer 12 has a higher surface roughness than that of the glass sheet 11b, the adhesive agent 14 is applied somewhat more thickly, so that the adhesive agent 14 can serve as a buffer for the surface roughness, and the surface state of the spacer 12 can be improved. As a result, the adhesion of the glass sheet 11b performed in the next step can be performed under a good condition.

FIG. 5 (d) is a drawing illustrating an example of a glass sheet adhesion step. In the glass sheet adhesion step, another glass sheet 11b is adhered to the spacer 12 to which the adhesive agent 14 is applied. In this case, the glass sheet 11b is adhered to the spacer 12 in a state in which the adhesive agent 14 is not applied to the glass sheet 11b and the adhesive agent 14 is applied to only the spacer 12.

As described above, the glass sheet 11b may be adhered upon applying the adhesive agent 14 to the spacer 12, not the glass sheet 11b. Therefore, the insulating glass 10 can be manufactured from one side (a lower side in FIG. 5) in a successively stacking manner, and the workability can be improved. Since space for individually applying the adhesive agent 14 to the glass sheet 11b is not required, space can be saved during manufacturing of the insulating glass. In addition, the size of the area of the adhesive agent 14 for adhering the second glass sheet 11b and the spacer 12 can be minimized, and the amount of usage of the adhesive agent 14 can be reduced. In addition, the adhesive agent 14 can be prevented from jutting out to unnecessary portions, and the appearance of the insulating glass can be improved, although it is an inner surface of the air space layer 15.

It should be noted that, as the adhesive agent 14, the same adhesive agent 14 can be used in both of the glass sheet adhesive agent application step of FIG. 5 (a) and the spacer adhesive agent application step of FIG. 5 (c). This is because, in either case, the adhesion target is the glass sheets 11a, 11b and the spacer 12, and the adhesive agent is used for adhesion between target objects of the same type.

Also, in a manner similar to what has been explained with FIG. 3 (a), the application method and application means of the adhesive agent 14 to the glass sheet 11b and the spacer 12 can be selected from various application methods and application means according to the purpose. The contents thereof is as explained with reference to FIG. 3 (a), and accordingly, the explanation thereabout is omitted here.

It should be noted that, like the first embodiment, in the glass adhesion step, the glass sheet 11b may be pressurized as necessary. For the pressurization, the pressure may be applied from above the glass sheet 11b, or the pressure may be applied from both sides of the glass sheets 11a, 11b. With the pressurization, the adhesion between the glass sheets 11a, 11b and the spacer 12 can be ensured, and the positions of the glass sheets 11a, 11b and the spacer 12 can be fixed.

In FIG. 5, an example of manufacturing an insulating glass 10 including two glass sheets 11a, 11b has been described, but in order to manufacture insulating glass 10 including more glass sheets 11a, 11b such as three or four glass sheets, steps for applying the adhesive agent 14 onto the glass sheet 11b, adhering a new spacer 12, and adhering another glass sheet onto the new spacer 12 may be added. That is, the steps in FIG. 5 may be repeated according to the number of glass sheets in the insulating glass 10.

As described above, according to the method for manufacturing the insulating glass according to the third embodiment, a series of steps including the glass sheet adhesive agent application step, the spacer adhesion step, the spacer adhesive agent application step, and the glass sheet adhesion step can be performed in a similar operation based on application, and the workability and productivity can be improved.

Subsequently, composition examples of the adhesive agent 14 will be explained.

The thermoplastic resin composition constituting the spacer material is hydrophobic, and the glass sheets 1a, 1b are hydrophilic, and therefore, it is required to ensure adhesion property therebetween, but as long as the adhesion property therebetween can be ensured, various adhesive agents can be used. The urethane-based adhesive agent includes a polyacrylic polyol and at least one of a non-yellowing isocyanate and a derivative of a non-yellowing isocyanate, and may include a silane coupling agent or the like as necessary. It should be noted that the polyol means a polyfunctional alcohol having one or more hydroxyl groups in one molecule.

Here, the polyol included in the urethane-based adhesive agent preferably has a glass transition point Tg higher than 20 degrees Celsius. As a result, the initial strength at the time of adhesion can be secured, and the occurrence of plate misalignment when the high-temperature butyl type rubber and the glass are bonded can be prevented or suppressed. The molecular weight of the polyol is preferably in the range of 2000 to 50000. As a result, long-term reliability such as heat resistance and weather resistance can be ensured. Furthermore, the acid value of the polyol is preferably less than 3 KOHmg/g. This ensures the stability and workability of the adhesive agent solution. It should be noted that the acid value is the quantity of potassium hydroxide expressed in milligrams required to neutralize the free fatty acid present in 1 g of polyol, and indicates the degree of purification of the polyol. The lower the acid value is, the higher the degree of purification is.

Moreover, a silane coupling agent can be added to the above-mentioned adhesive agent as necessary. The silane coupling agent is used to improve the adhesion to glass.

Examples of the silane coupling agent include epoxy silanes such as 3-glycidoxypropyltrimethoxysilane and 3-glycidoxypropyltriethoxysilane, aminosilanes such as 3-aminopropyltrimethoxysilane, 3-aminopropylethoxysilane, 3-triethoxysilyl-N-(1,3-dimethyl-butylidene) propylamine, and the like.

Furthermore, an additive such as an antioxidant, a wetting agent, and an antifoaming agent, and an organic solvent may be added to the adhesive agent as necessary.

### [Examples]

Hereinafter, examples of the present invention will be explained. It should be noted that a term "width" used below corresponds to a size in the left-to-right direction of FIG. 1. Also, a term "thickness direction" corresponds to, for example, the vertical direction of FIG. 1, and "thickness" corresponds to, for example, a size in the vertical dimension of FIG. 1.

### (Example adhesive agent)

Table 1 illustrates compositions of adhesive agent solutions 1 to 3 prepared in this example which are not in accordance with the present invention.

**[Table 1]**

| | | ADHESIVE AGENT 1 | ADHESIVE AGENT 2 | ADHESIVE AGENT 3 |
|---|---|---|---|---|
| | URETHANE RESIN SOLVENT | 10 | 10 | 10 |
| | HEXAMETHYLENE DIISOCYANATE NURATE | 1.13 | 1.13 | 1.13 |
| ADHESIVE AGENT SOLVENT | 3-AMINOPROPYLTRIMETHOXYSILANE | 0.50 | 0.50 | 0.50 |
| | TOLUENE/METHYL ETHYL KETONE | 6.13 | 61.3 | 0 |
| | SOLID CONTENT CONCENTRATION | 10% | 1% | 50% |

The adhesive agent solutions 1 to 3 illustrated in Table 1 were prepared as follows.

48 g of 1,2-polybutadine hydride (the end of which is an OH group, and has a hydroxyl value of 46.3 mgKOH/g) was heated to 80 degrees Celsius, and 4 g of isophorone diisocyanate was gently added dropwise with stirring, and heated and stirred for 8 hours. After this was cooled, 94 g of a solvent in which toluene and methyl ethyl ketone are mixed at equal amounts and 42 g of 1,2-polybutadiene hydride were added and dissolved to obtain a urethane resin solution having a solid concentration of about 50 wt%. 1.13 parts by mass of hexamethylene diisocyanate nurate, 0.5 parts by mass of 3-aminopropyltrimethoxysilane, and 6.13 parts by mass of a solvent in which toluene and methyl ethyl ketone are mixed at equal amounts were added to 100 parts by mass of the solution to obtain the adhesive agent 1 in Table 1.

Likewise, 1.13 parts by mass of hexamethylene diisocyanate nurate, 0.5 parts by mass of 3-aminopropyltrimethoxysilane, and 61.3 parts by mass and 0 parts by mass of the solvent in which toluene and methyl ethyl ketone are mixed at equal amounts were added to 100 parts by mass of the urethane resin solution having the solid concentration of about 50 wt% to obtain each of the adhesive agents 2 and 3. The solid concentrations were 10%, 1%, and 50% for the adhesive agents 1, 2, and 3, respectively.

Table 2 illustrates the compositions of the adhesive agent solutions 4 to 7 prepared in this example, adhesive agent solution 7 of which is not in accordance with the present invention.

**[Table 2]**

| | | ADHESIVE AGENT 4 | ADHESIVE AGENT 5 | ADHESIVE AGENT 6 | ADHESIVE AGENT 7 |
|---|---|---|---|---|---|
| | POLYOL | 10 | 10 | 10 | 10 |
| | HEXAMETHYLENE DIISOCYANATE NURATE | 17.0 | 14.0 | 4.6 | 1.7 |
| ADHESIVE AGENT SOLVENT | 3-GLYCIDOXYPROPYLTRIMETHOXYSILANE | 1.0 | - | 1.0 | - |
| | 3-TRIETHOXYSILYL-N-(1,3-DIMETHYLBUTYLIDENE) PROPYLAMINE | - | 1.0 | - | 1.0 |
| | TOLUENE/METHYL ETHYL KETONE | 84.0 | 75.0 | 46.8 | 38.1 |
| | SOLID CONTENT CONCENTRATION | 25% | 25% | 25% | 25% |

Table 3 illustrates specific types and characteristics of polyols in adhesive agent solutions 4 to 7 illustrated in Table 2.

**[Table 3]**

| | | ADHESIVE AGENT 4 | ADHESIVE AGENT 5 | ADHESIVE AGENT 6 | ADHESIVE AGENT 7 |
|---|---|---|---|---|---|
| | TYPE | ACRYLIC POLYOL | ACRYLIC POLYOL | ACRYLIC POLYOL | POLYESTER POLYOL |
| | TG (DEGREES CELSIUS) | 60 | 60 | 24 | 36 |
| POLYOL | WEIGHT AVERAGE MOLECULAR WEIGHT | 14,000 | 14,000 | 46,000 | 11,000 |
| | HYDROXYL VALUE KOHmg/g | 90 | 90 | 30 | 11 |
| | ACID VALUE KOHmg/g | - | - | 2.0 | 3.0 |

17 parts by mass of hexamethylene diisocyanate adduct, 1.0 parts by mass of 3-glycidoxypropyltrimethoxysilane, and 84 parts by mass of a solvent in which toluene and methyl ethyl ketone are mixed at equal amounts were added to 10g of acrylic polyol (hydroxyl value 90 mgKOH/g) to obtain the adhesive agent solution 4. Likewise, the adhesive agent solutions 5 to 7 were obtained by mixing the raw materials and addition amounts illustrated in Tables 2 and 3.

### (Example of specer)

Table 4 illustrates compositions of the specers A, B, and C used in this exmaple.

**[Table 4]**

| | | SPACER A | SPACER B | SPACER C |
|---|---|---|---|---|
| | BUTYL RUBBER BUTYL 365 | 18.0 | 21.3 | 17.6 |
| | POLYISOBUTYLENE B15 | 18.0 | 21.3 | 17.6 |
| | LDPE | - | - | 2.0 |
| | HDPE HJ490 | - | 4.3 | - |
| SPACER | MODIFIED PE ET720X | 6.0 | - | - |
| | TACKIFIER HA125 | 10.7 | 10.6 | 10.6 |
| | TALC FH104A | 15.4 | 10.6 | 20.0 |
| | CARBON BLACK SEAST 3 | 10.6 | 10.6 | 10.6 |
| | 4A ZEOLITE POWDER | 21.3 | 21.3 | 21.2 |
| | ANTIOXIDANT | - | - | 0.4 |

The spacers A, B, and C illustrated in Table 4 were manufactured as follows.

In Table 4, each numerical value indicates the mass ratio with respect to 100 parts by mass.

For butyl type rubber, a butyl type rubber having a number average molecular weight of 76000 at the low molecular weight side was used within the range in which the number average molecular weight is equal to or more than 55000, in which the physical properties of high molecular weight butyl type rubber (i.e., elastomer properties, rubber-like elasticity) are exhibited. In the spacer A, the mass ratio of the butyl type rubber is 18.0 parts by mass, and in the spacer B, the mass ratio of the butyl type rubber is 21.3 parts by mass.

As polyisobutylene, polyisobutylene having a number average molecular weight of 41000 at the high molecular weight side was used within the range in which the number average molecular weight is equal to or less than 50000, in which the physical properties of the low molecular weight butyl type rubber (i.e., adhesiveness) are exhibited. In the spacer A, the mass ratio of the polyisobutylene is 18.0 parts by mass, and in the spacer B, the mass ratio of the polyisobutylene is 21.3 parts by mass.

The number average molecular weights Mn of these butyl type rubbers were measured using a size exclusion chromatography equipment manufactured by Tosoh Corporation (main unit: HLC-8220GPC, RI detector, guard column: TSKgen guardcolumn SuperHZ-L, column: TSKgen SuperHZ2000, TSKgel SuperHZ2500, TSKgel SuperHZ4000) with THF solvent and polystyrene standard sample as the reference.

For crystalline polyolefin, HDPE indicates a high-density polyethylene with a melt flow rate MFR of 20 g / 10 minutes (according to JIS K6922-2) and a melting point of 133 degrees Celsius. The HDPE is not included in the spacer A, and in the spacer B, the mass ratio of the HDPE is 4.3 parts by mass. The modified PE indicates polyethylene having a melt flow rate MFR of 80 g / 10 min (according to JIS K6922-2), a melting point of 98 degrees Celsius, and an acid anhydride and an acrylate ester introduced thereinto. In the spacer A, the mass ratio of the modified PE is 6.0 parts by mass, and the modified PE is not included in the spacer B.

As a tackifier, a DCPD (dicyclopentadiene) type hydrogenated hydrocarbon resin which is a material of which softening point is 125 degrees Celsius was used. In the spacer A, the mass ratio of the tackifier is 10.7 parts by mass, and in the spacer B, the mass ratio of the tackifier is 10.6 parts by mass.

Talc and carbon black are inorganic fillers. As the inorganic filler, an inorganic filler including talc having an average particle size of 2 µm and HAF (High Abrasion Furnace) type carbon black was used. Talc and carbon black are included in each of the spacers A and B, and included at parts by mass as indicated in Table 2.

As a desiccant, 4A type zeolite powder was used. Either of the spacers A and B includes 21.3 parts by mass of 4A type zeolite powder.

### (Examples and evaluation results)

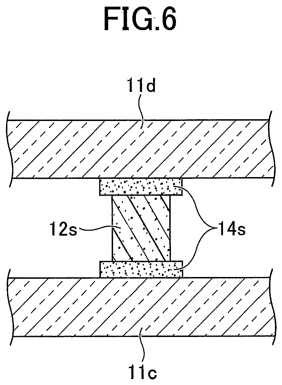

FIG. 6 is a figure illustrating a configuration of an adhesive property evaluation sample for evaluating adhesiveness of the examples 1 to 12 and comparative examples 1 to 3. Note, examples 1 to 8 and 12 are not in accordance with the present invention. An adhesion property evaluation sample was prepared by applying an adhesive agent 14s to surfaces of glass sheets 11c and 11d and adhering a spacer 12s thereto, and the adhesion properties of the examples 1 to 12 and the comparative examples 1 to 3 were evaluated.

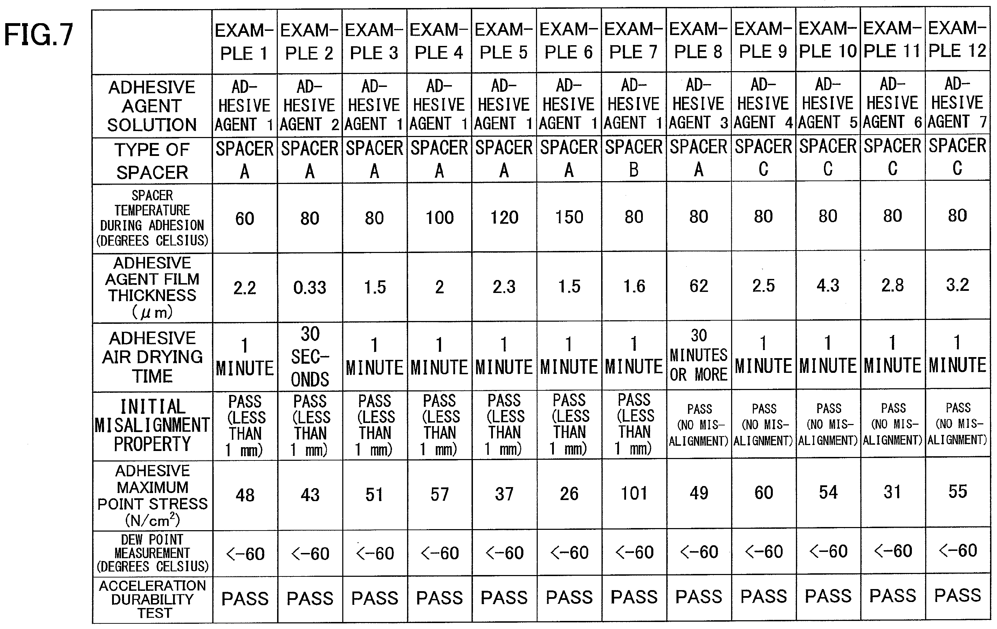

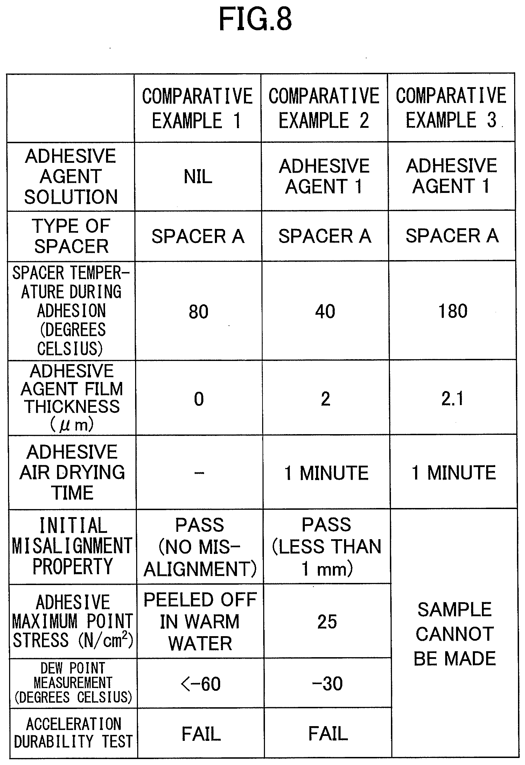

FIG. 7 is a table illustrating combination configurations and evaluation results of the examples 1 to 12. FIG. 8 is a table illustrating combination configurations and evaluation results of the comparative examples 1 to 3.

Specifically, the example 1 was prepared as follows. Two pieces of float glass having a size of 50 mm × 50 mm and a thickness of 5 mm were washed with ethanol, an adhesive agent 1 was soaked in the felt and applied to a central portion of the glass to have a width of 10 mm, and after one minute, the spacer A having a width of 7 mm × a thickness of 12 mm × a length of 50 mm, which had been heated to 60 degrees Celsius in advance, was arranged on the adhesive agent 1. Furthermore, another piece of glass with the adhesive agent 1 applied in a similar manner was placed thereon and pressed at a pressure of 0.1 MPa for 1 minute to obtain the sample of the example 1 as illustrated in FIG. 6.

The samples of the examples 3 to 6 and the comparative examples 2 and 3 were prepared in a manner similar to the example 1. In the example 2, an adhesive agent 2 was used. In the example 7, the spacer B was used. Further, in the example 8, the adhesive agent 3 was used. In the example 9, an adhesive agent 4 and a spacer C were used. In the example 10, an adhesive agent 5 and the spacer C were used. In the example 11, an adhesive agent 6 and the spacer C were used. In an example 12, an adhesive agent 7 and the spacer C were used. In comparative example 1, the adhesive agent was not used. At that time, the spacer temperature during the adhesion was also changed. In the examples 1 to 12, the spacer temperature was changed in the range of 60 to 150 degrees Celsius. In the comparative examples 2 and 3, the spacer temperature was set to 40 degrees Celsius, which is equal to or less than the lower limit, and 180 degrees, which is equal to or more than the upper limit, respectively.

In addition, a dew point measurement sample used for the dew point measurement in the second row from the bottom in FIG. 7 and FIG. 8 was obtained by washing two pieces of float glass having a size of 350 mm × 500 mm and a thickness of 5 mm with warm water and applying the adhesive agent 1 to the peripheral portion of the glass so as to have a width of 10 mm to obtain the dew point measurement sample of the example 1. Likewise, the dew point measurement samples of the examples 2 to 12 and the comparative examples 2 and 3 were obtained by changing the adhesive agent.

Furthermore, an acceleration measurement sample used in an acceleration durability test in the lowermost row in FIG. 7 and FIG. 8 was prepared as follows. After a dew point measurement sample was obtained, a spacer A having a width of 7 mm × a thickness of 6 mm, which had been heated to 60 degrees Celsius in advance, was arranged at the outer edge portion of a piece of glass. Then, another piece of glass was placed thereon and pressed at a pressure of 0.1 MPa for 5 minutes to obtain the sample of the example 1. In a similar manner, the insulating glass in the examples 2 to 12 and the comparative examples 1 to 3 were obtained by changing the type of the adhesive agent, the type of the spacer, and the spacer temperature during adhesion.

For initial plate misalignment property in the fourth row from the bottom in FIG. 7 and FIG. 8, two pieces of float glass having a size of 500 mm × 1000 mm and a thickness of 5 mm were washed with warm water, and the adhesive agent 1 was applied to a peripheral portion of the glass to have a width of 10 mm. Thereafter, the spacer A having a width of 7 mm × a thickness of 12 mm, which had been heated to 140 degrees Celsius in advance, was arranged at the peripheral portion of a piece of glass, and the adhesive agent 1 was applied to the spacer A. Furthermore, another piece of glass was placed thereon and pressed at a pressure of 0.1 MPa for 20 seconds to obtain the insulating glass (example 1). In a similar manner, the insulating glass in the examples 2 to 12 and the comparative examples 1 to 3 were obtained by changing the type of the adhesive agent, the type of the spacer, and the spacer temperature during adhesion.

The evaluation method in each item for the examples 1 to 12 and the comparative examples 1 to 3 is as follows.

For the adhesive agent film thickness in the fourth row from the top in FIG. 7 and FIG. 8, the adhesive agent solution was applied to float glass having a size of 50 mm × 50 mm and a thickness of 5 mm, and the solvent was dried. Thereafter, the application thickness of the adhesive agent was measured with a 3D measurement laser microscope (LEXT OLS4000 manufactured by OLYMPUS Corporation).

For the air drying time in the fifth row from the top in FIG. 7 and FIG. 8, the adhesive agent solution is applied to the float glass having the size of 50 mm × 50 mm and the thickness of 5 mm, and a time it takes for the solvent odor to disappear at a room temperature was defined as the air drying time. A case in which an air drying time is equal to or less than 20 minutes was determined to be "pass", a case in which the air drying time is more than 20 minutes is determined to be "fail".

For the initial plate misalignment property in the fourth row from the bottom in FIG. 7 and FIG. 8, one of glass sheets of an insulating glass immediately after pressing is fixed, and five minutes later, the misalignment from the initial position of the other glass sheet was measured. In a case where the glass sheet was not misaligned, or a case where the glass sheet was misaligned but the misalignment was less than 1 mm is determined to be "pass", and a case where the misalignment was equal to or more than 1 mm was determined to be "fail".

For adhesion property in the third row from the bottom in FIG. 7 and FIG. 8, after the sample shown in FIG. 5 was prepared, the sample was left at a room temperature for 2 days, further immersed in warm water at 60 degrees Celsius for 6 days, taken out from the warm water, and dried at a room temperature for 1 day. The dried sample was tested in an adhesion test in which the glass was pulled in both directions at a speed of 50 mm/min by using an automatic graph instrument (ORIENTIC RTC-1210). In the judgment, a maximum point stress of 25 N/cm² or more was determined to be "pass", and a maximum point stress of less than 25 N/cm² was determined to be "fail".

For the dew point measurement in the second row from the bottom in FIG. 6, the dew point was measured according to an apparatus and a method described in JIS R3209. As a judgment, as described in item 4.2 of JIS R3209, less than -35 degrees was determined to be "pass", and -35 degrees or more was determined to be "fail".

For the acceleration durability test in the lowermost row of FIG. 7 and FIG. 8, according to JIS R3209, an insulating glass including float glass having a size of 350 mm × 500 mm and a thickness of 5 mm and a spacer having a thickness of 6 mm was tested. The judgement was made according to the description in Class III judgment described in item 3b) of JIS R3209.

As illustrated in FIG. 7, in the examples 1 to 7 and the examples 9 to 12, the temperature of the spacer during the adhesion was set to 60 degrees Celsius to 150 degrees Celsius, which is within the range of 50 degrees Celsius or more and 160 degrees Celsius or less. In all of the examples, the film thickness was less than 2.3 µm, and a thin adhesive layer was obtained, and in all of the examples, the air drying time was less than 1 minute. The adhesion property was 26 N/cm² or more, which is more than the pass criteria, **i.e.,** 25 N/cm² or more. The dew point was -60 degrees Celsius, which have satisfied the pass criteria, i.e., less than -35 degrees Celsius. The acceleration durability test was also passed. Furthermore, the initial misalignment test was also passed.

For the example 8, the sample was obtained using the adhesive agent 3 when the temperature of the spacer during the adhesion was 80 degrees Celsius. The adhesive agent film thickness was 50 µm or more and the air drying time was 30 minutes or more, and only with regard to these points the criteria was not satisfied. However, all other evaluation items were passed, and the dew point measurement test and the acceleration durability test according to the JIS standard were also passed. Therefore, if the requirement for the air drying time is not high, the example 8 is also included in the usable range.

On the other hand, in the comparative example 1 which does not use an adhesive agent, the adhesion property was of course poor, and it peeled off in warm water, and the acceleration durability test was not passed. The comparative example 2 which uses the adhesive agent but in which the temperature of the spacer is 40 degrees Celsius which is equal to or less than the lower limit, **i.e.,** 50 degrees Celsius, did not pass the dew point measurement and acceleration durability test, and failed to meet the JIS standards. Further, in the comparative example 3 which uses the adhesive agent but in which the temperature of the spacer is 180 degrees Celsius which is equal to or more than the upper limit, i.e., 160 degrees Celsius, the spacer had a low viscosity, and it was impossible to prepare a sample with a predetermined thickness, and the dew point measurement test and the acceleration durability test could not be performed.

In this way, the examples 1 to 12 and the comparative examples 1 to 3 proved that, by using the butyl type rubber as the spacer and setting the temperature of the spacer during the adhesion to a range of 50 to 160 degrees Celsius, the insulating glass satisfying the JIS standard, attaining a short drying time, and capable of improving the productivity can be manufactured and configured.

This application claims the priority based on Japanese Patent Application No. 2017-090610 filed on April 28, 2017, with the Japan Patent Office.

### REFERENCE SIGNS LIST

10, 10' insulating glass
11a, 11b, 11c, 11d glass sheet
12, 12', 12s spacer
14, 14s adhesive layer
15 air space layer

## Claims

1. A method of manufacturing an insulating glass including glass sheets arranged to face each other with a spacer interposed between the glass sheets to form an air space layer between the glass sheets, the method comprising:
a step of applying an adhesive agent to at least one glass sheet of the glass sheets; and
a step of adhering the spacer at a temperature of 50 degrees Celsius or more and 160 degrees Celsius or less to the at least one glass sheet,
wherein the spacer is formed of a thermoplastic resin material including butyl type rubber,
wherein the adhesive agent is a urethane-based adhesive agent, and
wherein the urethane-based adhesive agent includes a polyacrylic polyol and at least one of a non-yellowing isocyanate and a derivative of the non-yellowing isocyanate.

2. The method of manufacturing the insulating glass according to claim 1,
wherein the step of applying the adhesive agent to the at least one glass sheet further comprises:
a step of applying the adhesive agent to a first glass sheet; and
a step of applying the adhesive agent to a second glass sheet, and,
wherein the step of adhering the spacer to the at least one glass sheet further comprises:
a step of adhering the spacer to the first glass sheet; and
a step of adhering a second glass sheet to the spacer adhered to the first glass sheet.

3. The method of manufacturing the insulating glass according to claim 2, wherein the step of applying the adhesive agent to the second glass sheet is performed before the step of adhering the spacer to the first glass sheet.

4. The method of manufacturing the insulating glass according to claim 2, wherein the step of applying the adhesive agent to the second glass sheet is performed after the step of adhering the spacer to the first glass sheet.

5. The method of manufacturing the insulating glass according to any one of claims 2 to 4, wherein the step of adhering the second glass sheet is performed while the second glass sheet is pressurized.

6. The method of manufacturing the insulating glass according to claim 1, wherein the step of adhering the spacer to the at least one glass sheet further comprises providing the spacer to a space between two glass sheets facing each other while the two glass sheets are arranged to face each other.

7. The method of manufacturing the insulating glass according to claim 6, further comprising, after the step of providing the spacer, a step of pressurizing the two glass sheets.

8. The method of manufacturing the insulating glass according to claim 7, wherein the step of pressurizing the two glass sheets is performed while the spacer is being heated.

9. The method of manufacturing the insulating glass according to claim 1, wherein the step of applying the adhesive agent to the at least one glass sheet further comprises applying the adhesive agent to only a first glass sheet,
the step of adhering the spacer to the at least one glass sheet further comprises adhering the spacer to the first glass sheet, and,
wherein the method further comprises:
applying the adhesive agent to a surface of the spacer opposite to the first glass sheet; and
adhering a second glass sheet to the surface of the spacer which is opposite to the first glass sheet and to which the adhesive agent is applied.

10. The method of manufacturing the insulating glass according to any one of claims 1 to 9, wherein the butyl type rubber includes a high molecular weight butyl type rubber and a low molecular weight butyl type rubber,
the high molecular weight butyl type rubber has a number average molecular weight of 55000 or more and 150000 or less, and
the low molecular weight butyl type rubber has a number average molecular weight of 35000 or more and 50000 or less.

11. The method of manufacturing the insulating glass according to any one of claims 1 to 10, wherein the step of adhering the spacer to the at least one glass sheet is performed 30 seconds to 20 minutes after the step of applying the adhesive agent to the at least one glass sheet.

12. The method of manufacturing the insulating glass according to any one of claims 1 to 11, wherein a thickness of the adhesive agent is 0.1 µm or more and 50 µm or less.

13. The method of manufacturing the insulating glass according to any one of claims 1 to 12, wherein the polyacrylic polyol included in the urethane-based adhesive agent has a glass transition temperature higher than 20 degrees Celsius.

14. Insulating glass comprising a plurality of glass sheets arranged to face each other with a spacer interposed between the glass sheets to form an air space layer between the glass sheets, wherein the spacer and the glass sheets are adhered by an adhesive agent,
a thickness of the adhesive agent is 0.1 µm or more and 50 µm or less, and
the spacer is formed of a thermoplastic resin material including butyl type rubber,
wherein the adhesive agent is a urethane-based adhesive agent, and
wherein the urethane-based adhesive agent includes a polyacrylic polyol and at least one of a non-yellowing isocyanate and a derivative of the non-yellowing isocyanate.

15. The insulating glass according to claim 14, wherein a sealing material is provided between the spacer and the glass sheets.

## Patentansprüche

1. Verfahren zur Herstellung eines Isolierglases, das Glasscheiben enthält, die so angeordnet sind, dass sie einander zugewandt sind, wobei ein Abstandshalter zwischen den Glasscheiben eingefügt ist, um eine Luftraumschicht zwischen den Glasscheiben zu bilden, das Verfahren umfassend:
einen Schritt des Auftragens eines Haftmittels auf mindestens eine Glasscheibe der Glasscheiben; und
einen Schritt des Anhaftens des Abstandshalters bei einer Temperatur von 50 Grad Celsius oder mehr und 160 Grad Celsius oder weniger an die mindestens eine Glasscheibe,
wobei der Abstandshalter aus einem thermoplastischen Harzmaterial gebildet ist, das Kautschuk des Butyltyps enthält,
wobei das Haftmittel ein Haftmittel auf Urethanbasis ist und
das Haftmittel auf Urethanbasis ein Polyacrylpolyol und mindestens eines von einem nicht-vergilbenden Isocyanat und einem Derivat des nicht-vergilbenden Isocyanats einschließt.

2. Verfahren zur Herstellung des Isolierglases nach Anspruch 1,
wobei der Schritt des Auftragens des Haftmittels auf die mindestens eine Glasscheibe weiter umfasst:
einen Schritt des Auftragens des Haftmittels auf eine erste Glasscheibe; und
einen Schritt des Auftragens des Haftmittels auf eine zweite Glasscheibe, und
wobei der Schritt des Anhaftens des Abstandshalters an die mindestens eine Glasscheibe weiter umfasst:
einen Schritt des Anhaftens des Abstandshalters an die erste Glasscheibe; und
einen Schritt des Anhaftens einer zweiten Glasscheibe an den an der ersten Glasscheibe haftenden Abstandshalter.

3. Verfahren zur Herstellung des Isolierglases nach Anspruch 2, wobei der Schritt des Auftragens des Haftmittels auf die zweite Glasscheibe vor dem Schritt des Anhaftens des Abstandhalters an die erste Glasscheibe durchgeführt wird.

4. Verfahren zur Herstellung des Isolierglases nach Anspruch 2, wobei der Schritt des Auftragens des Haftmittels auf die zweite Glasscheibe nach dem Schritt des Anhaftens des Abstandshalters an die erste Glasscheibe durchgeführt wird.

5. Verfahren zur Herstellung des Isolierglases nach einem der Ansprüche 2 bis 4, wobei der Schritt des Anhaftens der zweiten Glasscheibe durchgeführt wird, während die zweite Glasscheibe mit Druck beaufschlagt wird.

6. Verfahren zur Herstellung des Isolierglases nach Anspruch 1, wobei der Schritt des Anhaftens des Abstandshalters an der mindestens einen Glasscheibe weiter das Bereitstellen des Abstandshalters in einem Raum zwischen zwei einander zugewandten Glasscheiben umfasst, während die beiden Glasscheiben so angeordnet sind, dass sie einander zugewandt sind.

7. Verfahren zur Herstellung des Isolierglases nach Anspruch 6, weiter umfassend, nach dem Schritt des Bereitstellens des Abstandshalters, ein Schritt des Beaufschlagens der beiden Glasscheiben mit Druck.

8. Verfahren zur Herstellung des Isolierglases nach Anspruch 7, wobei der Schritt des Beaufschlagens der beiden Glasscheiben mit Druck durchgeführt wird, während der Abstandshalter erwärmt wird.

9. Verfahren zur Herstellung des Isolierglases nach Anspruch 1, wobei der Schritt des Auftragens des Haftmittels auf die mindestens eine Glasscheibe weiter das Auftragen des Haftmittels auf nur eine erste Glasscheibe umfasst,
der Schritt des Anhaftens des Abstandshalters an die mindestens eine Glasscheibe weiter das Anhaften des Abstandshalters an die erste Glasscheibe umfasst, und
wobei das Verfahren weiter umfasst:
das Auftragen des Haftmittels auf eine der ersten Glasscheibe gegenüberliegende Oberfläche des Abstandshalters; und
das Anhaften einer zweiten Glasscheibe an die Oberfläche des Abstandshalters, welche der ersten Glasscheibe gegenüberliegt und auf welche das Haftmittel aufgetragen ist.

10. Verfahren zur Herstellung des Isolierglases nach einem der Ansprüche 1 bis 9, wobei der Kautschuk des Butyltyps einen Kautschuk des Butyltyps mit hohem Molekulargewicht und einen Kautschuk des Butyltyps mit niedrigem Molekulargewicht einschließt,
der Kautschuk des Butyltyps mit hohem Molekulargewicht ein Molekulargewicht-Zahlenmittel von 55000 oder mehr und 150000 oder weniger aufweist und
der Kautschuk des Butyltyps mit niedrigem Molekulargewicht ein Molekulargewicht-Zahlenmittel von 35000 oder mehr und 50000 oder weniger aufweist.

11. Verfahren zur Herstellung des Isolierglases nach einem der Ansprüche 1 bis 10, der Schritt des Anhaftens des Abstandhalters an die mindestens eine Glasscheibe 30 Sekunden bis 20 Minuten nach dem Schritt des Auftragens des Haftmittels auf die mindestens eine Glasscheibe durchgeführt wird.

12. Verfahren zur Herstellung des Isolierglases nach einem der Ansprüche 1 bis 11, wobei eine Dicke des Haftmittels 0,1 µm oder mehr und 50 µm oder weniger beträgt.

13. Verfahren zur Herstellung des Isolierglases nach einem der Ansprüche 1 bis 12, wobei das Polyacrylpolyol, das in dem Haftmittel auf Urethanbasis enthalten ist, eine Glasübergangstemperatur von mehr als 20 Grad Celsius aufweist.

14. Isolierglas umfassend eine Mehrzahl von Glasscheiben, die so angeordnet sind, dass sie einander zugewandt sind, wobei ein Abstandshalter zwischen den Glasscheiben eingefügt ist, um eine Luftraumschicht zwischen den Glasscheiben zu bilden, wobei der Abstandshalter und die Glasscheiben durch ein Haftmittel aneinanderhaften,
eine Dicke des Haftmittels 0,1 µm oder mehr und 50 µm oder weniger beträgt und
der Abstandshalter aus einem thermoplastischen Harzmaterial gebildet ist, das Kautschuk des Butyltyps enthält,
wobei das Haftmittel ein Haftmittel auf Urethanbasis ist und
das Haftmittel auf Urethanbasis ein Polyacrylpolyol und mindestens eines von einem nicht-vergilbenden Isocyanat und einem Derivat des nicht-vergilbenden Isocyanats einschließt.

15. Isolierglas nach Anspruch 14, wobei zwischen dem Abstandhalter und den Glasscheiben ein Dichtungsmaterial bereitgestellt ist.

## Revendications

1. Procédé de fabrication d'un vitrage isolant comprenant des feuilles de verre disposées les unes en regard des autres avec un espaceur interposé entre les feuilles de verre pour former une couche d'air entre les feuilles de verre, le procédé comprenant :
une étape consistant à appliquer un agent adhésif sur au moins une feuille de verre parmi les feuilles de verre ; et
une étape consistant à coller l'espaceur à une température de 50 degrés Celsius ou plus et de 160 degrés Celsius ou moins à ladite au moins une feuille de verre,
dans lequel l'espaceur est formée d'un matériau en résine thermoplastique, y compris un caoutchouc de type butyle,
dans lequel l'agent adhésif est un agent adhésif à base d'uréthane, et
dans lequel l'agent adhésif à base d'uréthane comprend un polyol polyacrylique et au moins un isocyanate non jaunissant et un dérivé de l'isocyanate non jaunissant.

2. Procédé de fabrication du vitrage isolant selon la revendication 1,
dans lequel l'étape d'application de l'agent adhésif sur ladite au moins une feuille de verre comprend en outre :
une étape consistant à appliquer l'agent adhésif sur une première feuille de verre ; et
une étape consistant à appliquer l'agent adhésif sur une deuxième feuille de verre, et
dans lequel l'étape consistant à coller l'espaceur sur ladite au moins une feuille de verre comprend en outre :
une étape consistant à coller l'espaceur sur la première feuille de verre ; et
une étape consistant à coller une deuxième feuille de verre sur l'espaceur collée sur la première feuille de verre.

3. Procédé de fabrication du vitrage isolant selon la revendication 2, dans lequel l'étape consistant à appliquer l'agent adhésif sur la deuxième feuille de verre est réalisée avant l'étape consistant à coller l'espaceur sur la première feuille de verre.

4. Procédé de fabrication du vitrage isolant selon la revendication 2, dans lequel l'étape d'application de l'agent adhésif sur la deuxième feuille de verre est réalisée après l'étape consistant à coller l'espaceur sur la première feuille de verre.

5. Procédé de fabrication du vitrage isolant selon l'une des revendications 2 à 4, dans lequel l'étape consistant à coller la deuxième feuille de verre est réalisée alors que la deuxième feuille de verre est pressurisée.

6. Procédé de fabrication du vitrage isolant selon la revendication 1, dans lequel l'étape consistant à faire coller l'espaceur à ladite au moins une feuille de verre consiste en outre à fournir l'espaceur dans un espace situé entre deux feuilles de verre les unes en regard des autres alors que les deux feuilles de verre sont disposées les unes en regard des autres.

7. Procédé de fabrication du vitrage isolant selon la revendication 6, comprenant en outre, après l'étape consistant à fournir l'espaceur, une étape consistant à mettre sous pression des deux feuilles de verre.

8. Procédé de fabrication du vitrage isolant selon la revendication 7, dans lequel l'étape consistant à mettre sous pression les deux feuilles de verre est réalisée pendant le chauffage de l'espaceur.

9. Procédé de fabrication du vitrage isolant selon la revendication 1, dans lequel l'étape consistant à appliquer l'agent adhésif sur ladite au moins une feuille de verre comprend en outre l'application de l'agent adhésif sur une seule première feuille de verre,
l'étape consistant à coller l'espaceur à ladite au moins une feuille de verre comprend en outre le collage de l'espaceur à la première feuille de verre, et,
dans lequel le procédé comprend en outre :
appliquer l'agent adhésif sur une surface de l'espaceur opposée à la première feuille de verre ; et
coller une deuxième feuille de verre sur la surface de l'espaceur qui est opposée à la première feuille de verre et sur laquelle l'agent adhésif est appliqué.

10. Procédé de fabrication du vitrage isolant selon l'une quelconque des revendications 1 à 9, dans lequel le caoutchouc de type butyle comprend un caoutchouc de type butyle à haut poids moléculaire et un caoutchouc de type butyle à faible poids moléculaire,
le caoutchouc de type butyle à poids moléculaire élevé a un poids moléculaire moyen en nombre égal ou supérieur à 55 000 et inférieur ou égal à 150 000, et
le caoutchouc de type butyle à faible poids moléculaire a un poids moléculaire moyen en nombre de 35 000 ou plus et de 50 000 ou moins.

11. Procédé de fabrication du vitrage isolant selon l'une quelconque des revendications 1 à 10, dans lequel l'étape consistant à coller l'espaceur à ladite au moins une feuille de verre est réalisée 30 secondes à 20 minutes après l'étape consistant à appliquer l'agent adhésif sur ladite au moins une feuille de verre.

12. Procédé de fabrication du vitrage isolant selon l'une quelconque des revendications 1 à 11, dans lequel l'épaisseur de l'agent adhésif est supérieure ou égale à 0,1 µm et inférieure ou égale à 50 µm.

13. Procédé de fabrication du vitrage isolant selon l'une quelconque des revendications 1 à 12, dans lequel le polyol polyacrylique inclus dans l'agent adhésif à base d'uréthane a une température de transition vitreuse supérieure à 20 degrés Celsius.

14. Vitrage isolant comprenant une pluralité de feuilles de verre disposées les unes en regard des autres avec un espaceur interposé entre les feuilles de verre pour former une couche d'air entre les feuilles de verre, dans lequel l'espaceur et les feuilles de verre sont collés par un agent adhésif,
une épaisseur de l'agent adhésif est de 0,1 µm ou plus et de 50 µm ou moins, et l'espaceur est formée d'un matériau en résine thermoplastique, notamment d'un caoutchouc de type butyle,
dans lequel l'agent adhésif est un agent adhésif à base d'uréthane, et
dans lequel l'agent adhésif à base d'uréthane comprend un polyol polyacrylique et au moins un isocyanate non jaunissant et un dérivé de l'isocyanate non jaunissant.

15. Vitrage isolant selon la revendication 14, dans lequel un matériau d'étanchéité est prévu entre l'espaceur et les feuilles de verre.
